# EUROPEAN PATENT APPLICATION

(11) **EP 1 973 281 A2**
(43) Date of publication of application: **24.09.2008**
(21) Application number: 08005477.8
(22) Date of filing: 25.03.2008
(51) Int. Cl.: H04L 12/56

(54) **Method and apparatus for handling random access procedure in a wireless communications system**

(30) Priority: 21.03.2007 US 895987 P; 23.03.2007 US 896503 P; 25.06.2007 US 945948 P; 29.10.2007 US 983232 P; 07.12.2007 US 12061; 05.02.2008 US 25832
(71) Applicant: Innovative Sonic Limited, Tortola (VG)
(72) Inventor: Jen, Yu-Chih, Peitou Taipei City (TW)
(74) Representative: Schaeberle, Steffen

(57) **Abstract**

A method for handling a random access procedure in a user equipment, called UE hereinafter, of a wireless communications system includes sending a negative acknowledgement to a network or not sending an acknowledgement corresponding to a message 4 to request retransmission of message 4 when the message 4 is not successfully received from the network (302).

## Description

This application claims the benefit of U.S. Provisional Application No. 60/895,987, filed on 2007/3/21 and entitled "Method and Apparatus to improve LTE Random access procedure", the benefit of U.S. Provisional Application No. 60/945,948, filed on June 25, 2007 and entitled "Method and Apparatus to optimize Random Access Procedure", the benefit of U.S. Provisional Application No. 60/896,503, filed on 2007/3/23 and entitled "Method and Apparatus to optimize MAC header and Random Access Procedure contention", the benefit of U.S. Provisional Application No. 61/012,061, filed on 2007/12/7 and entitled "Method and Apparatus to improve operations in LTE protocol layers", the benefit of U.S. Provisional Application No. 61/025,832, filed on 2008/2/4 and entitled "Method and Apparatus to improve CSG cell selection, MBMS scheduling and RA back-off control in LTE", and the benefit of U.S. Provisional Application No. 60/983,232, filed on 2007/10/29 and entitled "Method and Apparatus to improve protocol layer service performance and realize mobility operations in LTE", the contents of which are incorporated herein by reference.

The present invention relates to a method and apparatus for handling random access procedure in a wireless communications system according to the pre-characterizing clauses of claims 1, 7, 14, 23, 24, 25, 26, 27, 28 and 29.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. However, due to demand for high-speed and multimedia applications, the next generation mobile telecommunications technology and related communication protocols have been developed.

In the Long Term Evolution wireless communications system (LTE system), a Random Access Channel (RACH) is configured in an uplink (UL) channel between a user equipment (UE) and the network, and utilized for timing alignment, RNTI (Radio Network Temporary Identifier) assignment, and resource request. In the starting state, only downlink (DL) timing between UE and Node B (NB) is synchronized, and signals on RACH can be used for UL timing alignment. Before performing UL timing alignment, UE uses downlink Synchronization Channel or reference signals to perform synchronization on timing and frame. However, since signals may be delayed due to a distance between the transmitter and receiver, UE is not able to determine whether a message transmitted from UE is at a starting position of a receiving frame ofNB. In addition, when NB provides service for multiple UEs at the same time, Round Trip Delays (RTDs) between each UE and NB may be different due to different distances thereof, causing timing offset. Therefore, NB evaluates timing offset of a UE according to RACH signals from the UE, and notifies the UE to adjusting UL timing via Downlink Shared Channel (DL-SCH), to achieve timing synchronization. A RACH signal is composed of preambles used for UL timing synchronization and UE identity detection, or carrying short sinalling or signature.

On the other hand, RACH signals among different UEs are transmitted to NB by contention-based or non-contention-based method. That is, UE can select a RACH transmission opportunity and randomly select a preamble to transmit signals, or transmit a signal carrying a preamble assigned by the network (in such a situation, the RACH transmission opportunity is assigned by the network or selected by the UE). If the network cannot identify the transmitted RACH signal due to collision or low power, or if contention lost occurs due to a randomly-selected preamble, the UE can retransmit the RACH signal with larger power in the next available RACH transmission opportunity, until a response from the network is received or a condition is reached, e.g., maximum transmitting or maximum power.

For LTE, a RACH transmission opportunity is related to a time-frequency radio resource, not only related to time or frequency. Therefore, when RACH physical resource is selected, its time period and frequency band are determined. Of course, at certain time period, there may be more than one frequency sub-band for selection. On the other hand, preamble can be random access preamble, which is randomly selected by UE, or dedicated preamble, which is assigned by network (source cell or target cell). Basically, when UE uses (randomly selected) random access preamble, there is possibility another UE use the same preamble and transmit it in the same RACH opportunity so that network doesn't know whether the signal comes from one or more than one UE. Consequently, contention exists and will be solved after UE sends its UE identity in subsequent message 3. In contrary, dedicated preamble is assigned by network to a known specific UE so it's unique and won't cause contention between UEs (no another UE use the same dedicated preamble.)

In LTE, asynchronous RACH is concluded and adopted as working assumption where dedicated preamble and random access preamble based RACH accesses may both be supported. Random access procedure performance mainly in terms of latency and overhead is affected by collision/contention probability, time/frequency resources, number of user equipments (load), number of preamble signature, channel quality, UE identities, and even access causes and so on. On the other hand, the design requirements in addition to performance, such as short life span of identity usage, to be common for various kinds of non-synchronous RACH accesses in E-UTRAN (eNB and aGW) for FDD and TDD as well as irrespective of cell size, optimization for connected state UEs, are considered while possible reasons for UE to access on RACH can be categorized into four main causes, which are initial access (e.g. UE originated call, network originated call, tracking area update and initial cell access) including initial NAS signaling for NAS procedures (e.g. service request, network attach, routing/tracking area update), synchronization request, handover access and scheduling request. According to requirements and need of support for possible access causes, the baseline random access procedure model and channel mapping (between logical channels and transport channels) are defined in the prior art. Current decision on four steps of random access procedures is shown as following:
(1) Step "Random Access Preamble on RACH in uplink": is corresponding to a message 1, which carries 6 bits, and indicates a random ID, and possibly other information, e.g., cause or size, potentially with priority, pathloss or CQI to allocate UL resource appropriately.
(2) Step "Random Access Response on DL-SCH": is corresponding to a message 2, which is semi-synchronous (within a flexible window of which the size is one or more TTI) with message 1, no HARQ (Hybrid Automatic Repeat Request) support, transmitted on L1/L2 +DL-SCH, addressed to RA-RNTI (Random Access RNTI) on L1/L2 control channel, conveys at least RA-preamble identifier, timing alignment information, initial UL grant and assignment of Temporary Cell RNTI (T-CRNTI), and is intended for one or multiple UEs in one DL-SCH message.
(3) Step "First scheduled UL transmission on UL-SCH": is corresponding to a message 3, which uses HARQ, operates in RLC TM (Radio Link Control Transparent Mode) without segmentation, conveys at least UE identifier and (explicit or implicit) information on whether C-RNTI is already available. Besides, in case of initial access and if the size of the message allows it, the initial NAS message (or something allowing to build the initial NAS message in eNB) can be included, and size of the message is dynamic.
(4) Step "Contention Resolution on DL-SCH": is corresponding to a message 4, which is not synchronized with message 3, and addressed to the Temporary C-RNTI on L1/L2 control channel (at least for initial access). Besides, content of the message is FFS (for further study), HARQ is supported, and HARQ feedback is transmitted only by the UE which detects its own UE identity, as provided in message 3, echoed in the RRC (Radio Resource Control) Contention Resolution message.

In the prior art, at initial access, the four steps are: Random Access Preamble on RACH, Random Access Response via CCCH (Common Control Channel) on DL-SCH, RRC Connection Request via CCCH on UL-SCH, and RRC Contention Resolution via DCCH on DL-SCH.

Therefore, for LTE, the prior art provides steps of RA procedure. However, some problems may occur.

The T-CRNTI used in addressing message 4 is assigned in message 2, which is intended for one or more UEs. To solve contention problem, network, which received message 3 with UE identity, echoes UE identity back to the UE in message 4 as contention resolution. However, message 4 by HARQ may be received unsuccessfully so that retransmission (e.g. once) of message 4 is allowed. However, if losing UE(s) didn't receive message 4 successfully at first transmission, it didn't detect UE identity so as to not know it actually failed in the contention. The losing UE will still send NACK back to the eNB to request retransmission; it consumes unnecessary radio resource and delay its next random access attempt. In this situation, eNB does not fully use the opportunity to save the losing UE (e.g. give one more chance participating contention) and consequently another random access procedure or RACH access requiring radio resource on RACH for message 1 and on UL-SCH for message 3 to provide information waste radio resource unnecessarily.

Once collision happens during random access procedure or RACH access, UEs involved in the collision should not try next attempt until back-off requirement is fulfilled. Back-off mechanism is under control by issued back-off parameters or random factors. However, if back-off control message is sent along with message 2, which is not supported by HARQ, another random access attempt may not work correctly or reasonably for UEs involved in the collision but not receiving message 2 successfully. Random access is dynamic so that back-off control parameter or random access probability factor should be able to provide on the need.

During the system malfunction, there is no way to stop random access procedures for being running. The handling of random access procedure control shall be considered to save UE power consumption and radio resource disturbance.

This in mind, the present invention aims at providing a method and apparatus of handling random access procedure in a wireless communications system, for implementing timing alignment and resource request, so as to enhance system efficiency.

This is achieved by a method and apparatus for handling random access procedure in a wireless communications system according to claims 1, 7, 14, 23, 24, 25, 26, 27, 28 and 29. The dependent claims pertain to corresponding further developments and improvements.

As will be seen more clearly from the detailed description following below, the claimed method for handling a random access procedure in a user equipment, called UE hereinafter, of a wireless communications system comprises sending a negative acknowledgement to a network or not sending an acknowledgement corresponding to a message 4 to request retransmission of message 4 when the message 4 is not successfully received from the network.

### Brief Description of the Drawings

Fig. 1 is a function block diagram of a wireless communications device.
Fig. 2 is a diagram of program code of Fig. 1.
Fig. 3 to Fig. 7 are flowcharts of processes according to embodiments of the present invention.
Fig. 8 is a schematic diagram of a wireless communications system.

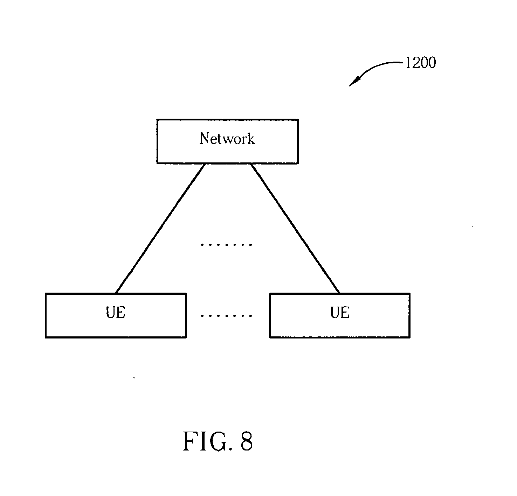

Please refer to Fig. 8, which illustrates a schematic diagram of a wireless communications system 1200. The wireless communications system 1200 is preferably an LTE system, and is briefly composed of a network and a plurality of UEs. In Fig. 8, the network and the UEs are simply utilized for illustrating the structure of the wireless communications system 1200. Practically, the network terminal may comprise a plurality of base stations (or Node B), radio network controllers and so on according to actual demands, and the UEs can be devices such as mobile phones, computer systems, etc.

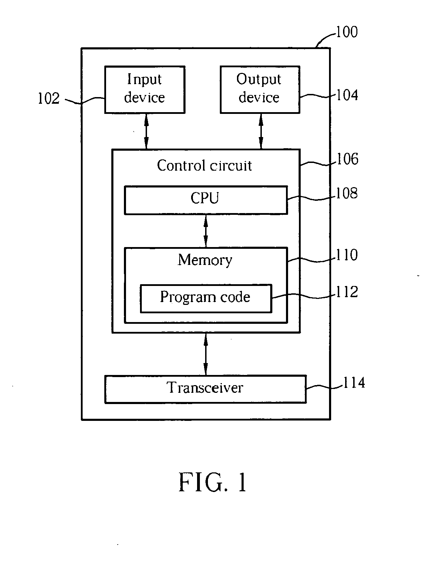

Please refer to Fig. 1, which is a functional block diagram of a communications device 100. The communications device 100 can be used for implementing the network and the UE shown in Fig. 8. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

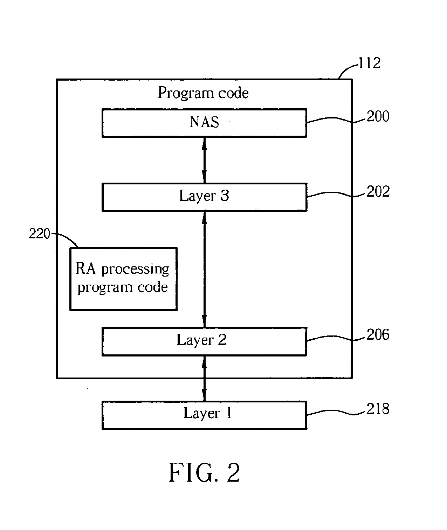

Please continue to refer to Fig. 2. Fig. 2 is a diagram of the program code 112 shown in Fig. 1. The program code 112 includes a Non Access Stratum (NAS) 200, a Layer 3 202, and a Layer 2 206, and is coupled to a Layer 1 218. The NAS 200 can generate NAS messages for realizing NAS applications. The Layer 3 202 is composed of an RRC layer, for performing radio resource control. The Layer 2 206 performs link control, and the Layer 1 218 performs physical connections. Whether a PDCP layer belongs to the Layer 3 202 or the Layer 2 206 is not relevant to this invention.

In order to achieve timing alignment and resource request, a RACH is configured in the communications device 100 for the random access procedure. In such a situation, the embodiment of the present invention provides a RA processing program code 220 for handling a random access procedure, so as to prevent the prior art problems. In the following, definitions of the messages 1, 2, 3, 4 are the same as what mentioned above. That is, the message 1 is corresponding to step "Random Access Preamble on RACH in uplink", the message 2 is corresponding to step "Random Access Response on DL-SCH", the message 3 is corresponding to step "First scheduled UL transmission on UL-SCH", and the message 4 is corresponding to step "Contention Resolution on DL-SCH."

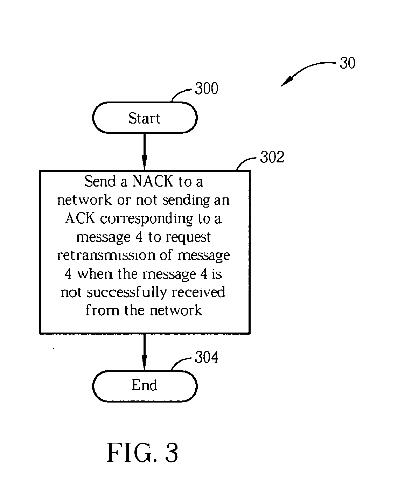

Please refer to Fig. 3, which illustrates a schematic diagram of a process 30 according to an embodiment of the present invention. The process 30 is utilized for handling a random access procedure in a UE of the wireless communications system 1200, and can be compiled into the RA processing program code 220. The process 30 comprises the following steps:
Step 300: Start.
Step 302: Send a NACK to a network or not sending an ACK corresponding to a message 4 to request retransmission of message 4 when the message 4 is not successfully received from the network.
Step 304: End.

According to the process 30, the UE sends a NACK to a network or not sending an ACK corresponding to a message 4 to request retransmission of message 4 when the message 4 is not successfully received from the network.

As mentioned above, if losing UE didn't receive the message 4 successfully at first transmission, it didn't detect UE identity so as to not know it actually failed in the contention. In such a situation, when the message 4 is not successfully received from the network, the embodiment of the present invention sends a NACK to a network or not sending an ACK corresponding to a message 4 to request retransmission of message 4.

Preferably, the UE is capable of being considered as a loser UE or a winner UE in a current contention, or the network entity reconsiders whether the UE can win the current contention, and sending the negative acknowledgement to the network is sending the NACK only if the UE receives T-CRNTI or C-RNTI addressed to it on control channel or sending the negative acknowledgement along with its UE identity used in message 3 back to the network to request retransmission of message 4.

Therefore, via the process 30, the UE sends a NACK to a network or not sending an ACK corresponding to a message 4 to request retransmission of message 4 when the message 4 is not successfully received from the network.

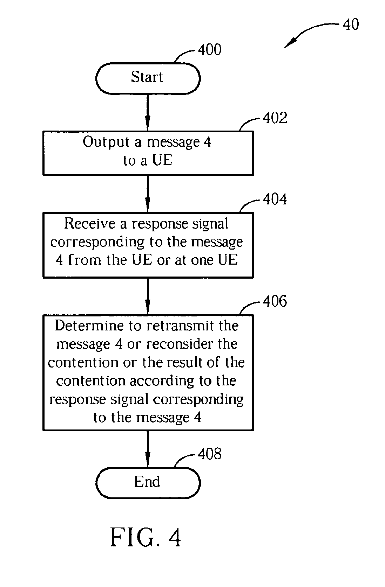

Please refer to Fig. 4, which illustrates a schematic diagram of a process 40 according to an embodiment of the present invention. The process 40 is utilized for handling a random access procedure in a network of the wireless communications system 1200, and can be compiled into the RA processing program code 220. The process 40 comprises the following steps:
Step 400: Start.
Step 402: Output a message 4 to a UE.
Step 404: Receive a response signal corresponding to the message 4 from the UE or at one UE.
Step 406: Determine to retransmit the message 4 or reconsider the contention or the result of the contention according to the response signal corresponding to the message 4.
Step 408: End.

According to the process 40, after receiving a response signal corresponding to the message 4 from the UE or at one UE, the network determines to retransmit the message 4 or reconsiders the contention or the result of the contention according to the response signal corresponding to the message 4.

Preferably, determining to retransmit the message 4 or reconsidering the contention or the result of the contention according to the response signal corresponding to the message 4 comprises retransmitting the message 4 or not retransmitting the message 4 or reconsidering contention or the result of the contention or transmitting a message 4 when only a negative acknowledgment is received or an acknowledgement corresponding to the message 4 is not received. Determining to retransmit the message 4 or reconsidering the contention or the result of the contention according to the response signal corresponding to the message 4 further comprises when an acknowledgement or an negative acknowledgement corresponding to the message 4 is received or only the acknowledgement is received, determining that the UE successfully receives the message and the message 4 is not retransmitted, or transmitting a message 4 to one of the at least one UE during the current contention, or reconsidering contention or the result of the contention. Determining to retransmit the message 4 or reconsidering the contention or the result of the contention according to the response signal corresponding to the message 4 further comprises when any response signal corresponding to the message 4 is not received, determining that the UE does not receive the message 4, and the message 4 is retransmitted, or transmitting a message 4 to one of the at least one UE during the current contention, or reconsidering contention or the result of the contention during the current contention.

In addition, determining whether to retransmit the message 4 or reconsider the contention or the result of the contention is preformed according to a standardized rule or conditions. Determining to retransmit the message 4 or reconsidering the contention or the result of the contention according to the response signal corresponding to the message 4 further comprises determining possible acknowledgement error when an acknowledgement corresponding to the message 4 is received.

Therefore, via the process 40, the embodiment of the present invention determines to retransmit the message 4 or reconsiders the contention or the result of the contention according to the response signal corresponding to the message 4.

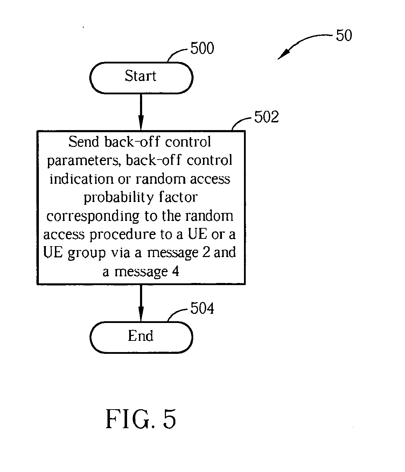

Please refer to Fig. 5, which illustrates a schematic diagram of a process 50 according to an embodiment of the present invention. The process 50 is utilized for handling a random access procedure in a network of the wireless communications system 1200, and can be compiled into the RA processing program code 220. The process 50 comprises the following steps:
Step 500: Start.
Step 502: Send back-off control parameters, back-off control indication or random access probability factor corresponding to the random access procedure to a UE or a UE group via a message 2 and a message 4.
Step 504: End.

According to the process 50, the embodiment of the present invention sends back-off control parameters, back-off control indication or random access probability factor corresponding to the random access procedure to a UE or a UE group via a message 2 and a message 4.

Preferably, the back-off control parameters, back-off control indication or random access probability factor corresponding to the random access procedure are utilized for a back-off mechanism, or determining back-off control mechanism before a random access attempt, or applying the back-off control mechanism before the random access attempt. When the UE or the UE group does not receive the back-off control parameters, back-off control indication or random access probability factor corresponding to the random access procedure, the UE or the UE group uses the previous back-off control parameters, back-off control indication or random access probability factor corresponding to the random access procedure when using the back-off control mechanism is necessary. When the UE or the UE group does not receive the back-off control parameters, back-off control indication or random access probability factor corresponding to the random access procedure, the UE or the UE group uses default back-off control configurations or does not use the back-off control mechanism when using the back-off control mechanism. When the UE or the UE group receives the back-off control parameters, back-off control indication or random access probability factor corresponding to the random access procedure, the UE or the UE group uses updated back-off control parameters, back-off control indication, or random access probability factor. When the UE or the UE group receives the back-off control parameters, back-off control indication or random access probability factor corresponding to the random access procedure, the UE or the UE group updates stored back-off control parameters, a back-off control indication, or a random access probability factor. The UE or the UE group uses previous, default, updated back-off control parameters, back-off control indication or random access probability factor when using the back-off control mechanism is necessary according to a standardized rule or condition.

Therefore, via the process 50, the embodiment of the present invention sends back-off control parameters, back-off control indication or random access probability factor corresponding to the random access procedure to a UE or a UE group via a message 2 and a message 4.

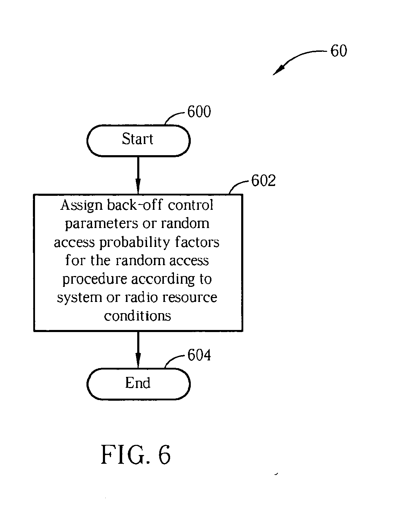

Please refer to Fig. 6, which illustrates a schematic diagram of a process 60 according to an embodiment of the present invention. The process 60 is utilized for handling a random access procedure in a network of the wireless communications system 1200, and can be compiled into the RA processing program code 220. The process 60 comprises the following steps:
Step 600: Start.
Step 602: Assign back-off control parameters or random access probability factors for the random access procedure according to system or radio resource conditions.
Step 604: End.

According to the process 60, the embodiment of the present invention assigns back-off control parameters or random access probability factors for the random access procedure according to system or radio resource conditions.

Therefore, via the process 60, the embodiment of the present invention can optimize the back-off control parameters or random access probability factors.

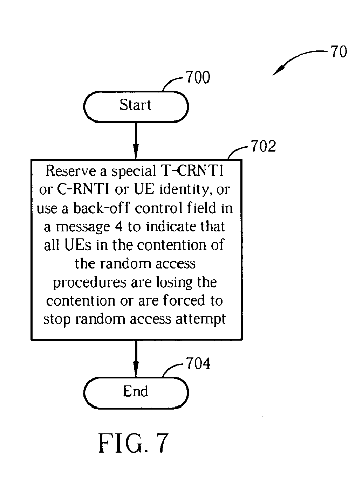

Please refer to Fig. 7, which illustrates a schematic diagram of a process 70 according to an embodiment of the present invention. The process 70 is utilized for handling a random access procedure in a network of the wireless communications system 1200, and can be compiled into the RA processing program code 220. The process 70 comprises the following steps:
Step 700: Start.
Step 702: Reserve a special T-CRNTI or C-RNTI or UE identity, or use a back-off control field in a message 4 to indicate that all UEs in the contention of the random access procedures are losing the contention or are forced to stop random access attempt.
Step 704: End.

According to the process 70, the embodiment of the present invention reserves a special T-CRNTI or C-RNTI or UE identity, or uses a back-off control field in a message 4 to indicate that all UEs in the contention of the random access procedures are losing the contention or are forced to stop random access attempt.

Therefore, via the process 70, the network can timely indicate that all UEs in the contention of the random access procedures are losing the contention or are forced to stop random access attempt.

In summary, the embodiment of the present invention provides different operations of the random access procedure, to achieve timing alignment and resource request.

## Claims

1. A method for handling a random access procedure in a user equipment, called UE hereinafter, of a wireless communications system comprising:
triggering the random access procedure;
**characterized by** sending a negative acknowledgement to a network or not sending an acknowledgement corresponding to a message 4 to request retransmission of message 4 when the message 4 is not successfully received from the network (302).

2. The method of claim 1, **characterized in that** the UE is capable of being considered as a loser UE or a winner UE in a current contention, or the network entity reconsiders whether the UE can win the current contention.

3. The method of claim 1, **characterized in that** sending the negative acknowledgement to the network is sending the negative acknowledgement only if the UE receives T-CRNTI or C-RNTI addressed to it on control channel.

4. The method of claim 1, **characterized in that** sending the negative acknowledgement to the network is sending the negative acknowledgement along with its UE identity used in message 3 back to the network to request retransmission of message 4.

5. The method of claim 4, **characterized in that** the message 3 is corresponding to a step "First scheduled Uplink transmission on uplink shared channel".

6. The method of claim 1, **characterized in that** the message 4 is corresponding to a step "Contention Resolution on DL-SCH".

7. A method for handling a random access procedure in a network of a wireless communications system comprising:
outputting a message 4 to a user equipment, called UE hereinafter (402); receiving a response signal corresponding to the message 4 from the UE or at one UE (404); and
**characterized by** determining to retransmit the message 4 or reconsidering the contention or the result of the contention according to the response signal corresponding to the message 4 (406).

8. The method of claim 7, **characterized in that** determining to retransmit the message 4 or reconsidering the contention or the result of the contention according to the response signal corresponding to the message 4 comprises retransmitting the message 4 or not retransmitting the message 4 or reconsidering contention or the result of the contention or transmitting a message 4 when only a negative acknowledgment is received or an acknowledgement corresponding to the message 4 is not received.

9. The method of claim 7, **characterized in that** determining to retransmit the message 4 or reconsidering the contention or the result of the contention according to the response signal corresponding to the message 4 comprises when an acknowledgement or an negative acknowledgement corresponding to the message 4 is received or only the acknowledgement is received, determining that the UE successfully receives the message and the message 4 is not retransmitted, or transmitting a message 4 to one of the at least one UE during the current contention, or reconsidering contention or the result of the contention.

10. The method of claim 7, **characterized in that** determining to retransmit the message 4 or reconsidering the contention or the result of the contention according to the response signal corresponding to the message 4 comprises when any response signal corresponding to the message 4 is not received, determining that the UE does not receive the message 4, and the message 4 is retransmitted, or transmitting a message 4 to one of the at least one UE during the current contention, or reconsidering contention or the result of the contention during the current contention.

11. The method of claim 7, **characterized in that** determining whether to retransmit the message 4 or reconsider the contention or the result of the contention is preformed according to a standardized rule or conditions.

12. The method of claim 7, **characterized in that** determining to retransmit the message 4 or reconsidering the contention or the result of the contention according to the response signal corresponding to the message 4 comprises determining possible acknowledgement error when an acknowledgement corresponding to the message 4 is received.

13. The method of claim 7, **characterized in that** the message 4 is corresponding to a step "Contention Resolution on DL-SCH".

14. A method for handling a random access procedure in a network of a wireless communications system comprising:
triggering the random access procedure;
**characterized by** sending back-off control parameters, back-off control indication or random access probability factor corresponding to the random access procedure to a user equipment, called UE hereinafter, or a UE group via a message 2 and a message 4 (502).

15. The method of claim 14, **characterized in that** the back-off control parameters, back-off control indication or random access probability factor corresponding to the random access procedure are utilized for a back-off mechanism, or determining back-off control mechanism before a random access attempt, or applying the back-off control mechanism before the random access attempt.

16. The method of claim 14, **characterized in that** when the UE or the UE group does not receive the back-off control parameters, back-off control indication or random access probability factor corresponding to the random access procedure, the UE or the UE group uses the previous back-off control parameters, back-off control indication or random access probability factor corresponding to the random access procedure when using the back-off control mechanism is necessary.

17. The method of claim 14, **characterized in that** when the UE or the UE group does not receive the back-off control parameters, back-off control indication or random access probability factor corresponding to the random access procedure, the UE or the UE group uses default back-off control configurations or does not use the back-off control mechanism when using the back-off control mechanism.

18. The method of claim 14, **characterized in that** when the UE or the UE group receives the back-off control parameters, back-off control indication or random access probability factor corresponding to the random access procedure, the UE or the UE group uses updated back-off control parameters, back-off control indication, or random access probability factor.

19. The method of claim 14, **characterized in that** when the UE or the UE group receives the back-off control parameters, back-off control indication or random access probability factor corresponding to the random access procedure, the UE or the UE group updates stored back-off control parameters, a back-off control indication, or a random access probability factor.

20. The method of claim 14, **characterized in that** the UE or the UE group uses previous, default, updated back-off control parameters, back-off control indication or random access probability factor when using the back-off control mechanism is necessary according to a standardized rule or condition.

21. The method of claim 14, **characterized in that** the message 2 is corresponding to a step "Random Access Response on DL-SCH".

22. The method of claim 14, **characterized in that** the message 4 is corresponding to a step "Contention Resolution on DL-SCH".

23. A method for handling a random access procedure in a network of a wireless communications system comprising:
triggering the random access procedure;
**characterized by** assigning back-off control parameters or random access probability factors for the random access procedure according to system or radio resource conditions (602).

24. A method for handling a random access procedure in a network of a wireless communications system comprising:
triggering the random access procedure;
**characterized by** reserving a special T-CRNTI or C-RNTI or a user equipment, called UE hereinafter, identity, or using a back-off control field in a message 4 to indicate that all UEs in the contention of the random access procedures are losing the contention or are forced to stop random access attempt (702).

25. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
**characterized by** sending a negative acknowledgement to a network or not sending an acknowledgement corresponding to a message 4 to request retransmission of message 4 when the message 4 is not successfully received from the network (302).

26. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
outputting a message 4 to a user equipment, called UE hereinafter (402);
receiving a response signal corresponding to the message 4 from the UE or at one UE (404);
**characterized by** determining to retransmit the message 4 or reconsidering the contention or the result of the contention according to the response signal corresponding to the message 4 (406).

27. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
**characterized by** sending back-off control parameters, back-off control indication or random access probability factor corresponding to the random access procedure to a user equipment, called UE hereinafter, or a UE group via a message 2 and a message 4 (502).

28. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
**characterized by** assigning back-off control parameters or random access probability factors for the random access procedure according to system or radio resource conditions (602).

29. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
**characterized by** reserving a special T-CRNTI or C-RNTI or a user equipment, called UE hereinafter, identity, or using a back-off control field in a message 4 to indicate that all UEs in the contention of the random access procedures are losing the contention or are forced to stop random access attempt (702).
